# EUROPEAN PATENT APPLICATION

(11) **EP 4 818 509 A2**
(43) Date of publication of application: **07.10.2026**
(21) Application number: 26170684.0
(22) Date of filing: 02.04.2026
(51) Int. Cl.: F02K 3/06, F02C 9/54, F02C 9/58, F02K 5/00

(54) **GAS TURBINE PROPULSION SYSTEM WITH VARIABLE PITCH FAN AND METHOD FOR OPERATING THE SYSTEM**

(30) Priority: 04.04.2025 US 202519170886
(71) Applicant: RTX Corporation, Farmington, CT 06032 (US)
(72) Inventor: CLARK, Thomas E., Wells, 04090 (US); AKIN, John, Charlotte, 28205 (US); CHOE, Jung Muk, Glastonbury, 06033 (US); YAZICI, Murat, Glastonbury, 06033 (US)
(74) Representative: Dehns

(57) **Abstract**

A system for and method of operating a propulsion system for an aircraft is provided. The propulsion system includes a gas turbine engine (20), an accessory gearbox (42), and an electric motor (48). The gas turbine engine (20) includes a spool (37) having a fan rotor (28) with a plurality of fan blades (28A), and a pitch control mechanism (58) engaged with the fan blades (28A). The method includes: providing rotational drive from the spool (37) to the accessory gearbox (42); using the accessory gearbox (42) to drive the electric motor (48) to produce electrical energy, wherein the electric motor (48) has a predetermined maximum rotational speed limit; and controlling the propulsion system to follow a predetermined descent portion (60) of a flight profile for the aircraft, wherein controlling the propulsion system includes controlling the pitch control mechanism (58) to alter an amount of thrust produced by the fan blades (28A) by altering a pitch of the fan blades (28A).

## Description

### BACKGROUND OF THE INVENTION

### 1. Technical Field

The present invention relates to gas turbine engine propulsion systems in general and to systems and methods for extracting power from a gas turbine engine propulsion system with a variable pitch fan in particular.

### 2. Background Information

Hybrid electric propulsion systems that include a gas turbine engine may integrate an electric machine (functioning as a motor or as a generator) to inject or extract mechanical power to modules or spools in the engine. For example, in a dual spool turbofan engine, an electrical machine may be integrated to couple power to the high pressure spool or the low pressure spool. The fan is mechanically connected to a turbine section via the low pressure spool. The fan speed and associated fan thrust follow a characteristic of a combustor fuel map and the turbine rotor speed. For some gas turbine engines with low pressure spool mounted electric machines, the wide speed range of the low pressure spool may pose a challenge.

### SUMMARY

According to an aspect of the present invention a method of operating a propulsion system for an aircraft is provided. The propulsion system includes a gas turbine engine, an accessory gearbox, and an electric motor. The gas turbine engine includes a spool having a fan rotor with a plurality of fan blades, and a pitch control mechanism engaged with the plurality of fan blades. The method includes: providing rotational drive from the spool to the accessory gearbox; using the accessory gearbox to drive an electric motor to produce electrical energy, wherein the electric motor has a predetermined maximum rotational speed limit; and controlling the propulsion system to follow a predetermined descent portion of a flight profile for the aircraft, wherein controlling the propulsion system includes controlling the pitch control mechanism to alter an amount of thrust produced by the plurality of fan blades by altering a pitch of the plurality of fan blades.

Optionally, and in accordance with the above, the step of using the accessory gearbox to drive the electric motor may include driving the electric motor at an electric motor rotational speed below the predetermined maximum rotational speed limit.

Optionally, and in accordance with any of the above, the predetermined descent portion may be a function of a rotational speed of the spool versus altitude, and the predetermined descent portion may have a constant slope, and the predetermined descent portion may have a negative slope.

Optionally, and in accordance with any of the above, the spool may be a first spool that extends between the fan rotor and a first turbine section, and the gas turbine engine may further include a second spool that extends between a compressor section and a second turbine section.

According to an aspect of the present invention, a method of operating an aircraft propulsion system that includes a gas turbine engine, an accessory gearbox, and an electric machine is provided. The gas turbine engine includes a spool that includes a fan rotor having a plurality of fan blades and a turbine section, and a pitch control mechanism engaged with the plurality of fan blades. The accessory gearbox is in drive communication with the spool, and the electric machine is mounted on the accessory gearbox. The method includes: controlling a rotational speed of the spool during a descent portion of a flight profile, including controlling the pitch control mechanism to alter an amount of thrust produced by the plurality of fan blades by altering a pitch of the plurality of fan blades; and providing rotational drive to the electric machine from the accessory gearbox during the descent portion of the flight profile.

Optionally, and in accordance with the above, the electric machine may have a predetermined maximum rotational speed limit, and the step of controlling the pitch control mechanism to alter the amount of thrust produced by the plurality of fan blades may be performed to maintain a speed of the electric machine below the predetermined maximum rotational speed limit.

Optionally, and in accordance with any of the above, the electric machine may be configured to function as an electric generator, and the electric machine may be an electric motor.

According to an aspect of the present invention, an aircraft propulsion system is provided that includes a gas turbine engine, an accessory gearbox, an electric machine, and a controller. The gas turbine engine includes a first spool and a pitch control mechanism. The first spool includes a first compressor section, a first turbine section, and a fan section. The fan section includes a plurality of fan blades. The pitch control mechanism is engaged with the plurality of fan blades and is configured to alter a pitch of the plurality of fan blades. The accessory gearbox is in drive communication with the first spool. The electric machine is mounted on the accessory gearbox. The controller is in communication with the pitch control mechanism, the electric machine, and a non-transitory memory storing instructions, which instructions when executed cause the controller to: control a rotational speed of the first spool during a flight profile, including controlling the pitch control mechanism to alter an amount of thrust produced by the plurality of fan blades by altering a pitch of the plurality of fan blades; and control the electric machine to produce electric energy during the flight profile.

Optionally, and in accordance with the above, the instructions when executed may cause the controller to control the rotational speed of the first spool during a descent portion of the flight profile, and control the electric machine to produce electric energy during the descent portion of the flight profile.

Optionally, and in accordance with any of the above, the gas turbine engine may include a second spool that includes a second compressor section and a second turbine section. The first compressor section may be a low pressure compressor section, the first turbine section may be a low pressure turbine section, the second compressor section may be a high pressure compressor section, and the second turbine section may be a high pressure turbine section.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and non-limiting.

### BRIEF DESCRIPTION OF THE DRAWINGS

FIG. 1 is a diagrammatic sectional view of a gas turbine engine embodiment according to the present invention.
FIG. 2 is a diagrammatic representation of a fan blade illustrating changes in pitch.
FIG. 3 is a graph of gas turbine engine spool speed versus aircraft altitude, illustrating a descent portion of a flight profile for a gas turbine engine having a fan section with fixed pitch fan blades.
FIG. 4 is a graph of electric machine rotational speed versus aircraft altitude, illustrating a descent portion of a flight profile for a gas turbine engine having a fan section with fixed pitch fan blades.
FIG. 5 is a graph of gas turbine engine spool speed versus aircraft altitude, illustrating a descent portion of a flight profile for a gas turbine engine having a fan section with variable pitch fan blades.
FIG. 6 is a graph of electric machine rotational speed versus aircraft altitude, illustrating a descent portion of a flight profile for a gas turbine engine having a fan section with variable pitch fan blades.

### DETAILED DESCRIPTION

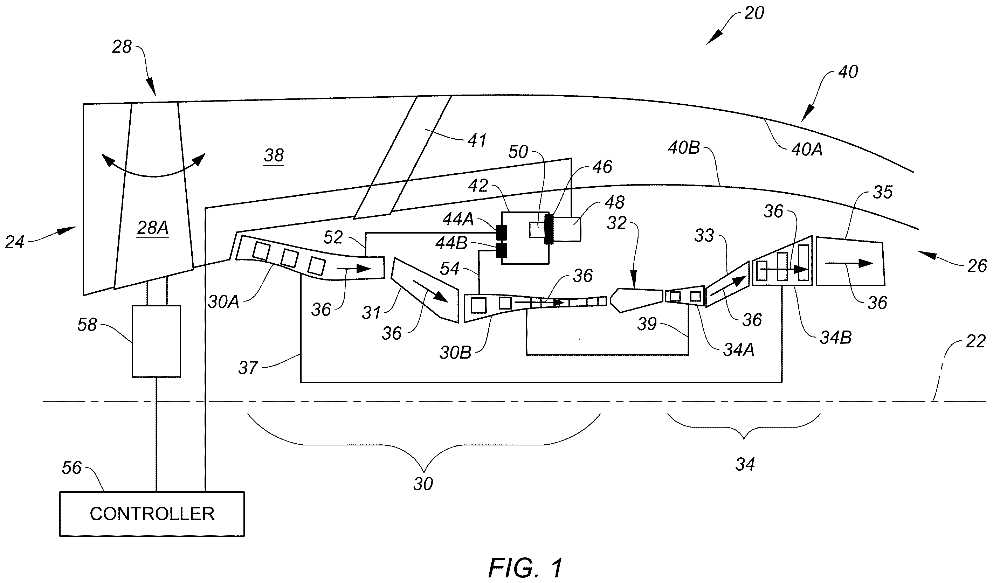

FIG. 1 shows a diagrammatic view of a propulsion system that includes a gas turbine engine 20. The gas turbine engine 20 extends along an axial centerline 22 between an upstream airflow inlet 24 and a downstream exhaust 26. The gas turbine engine 20 includes a fan section 28, a compressor section 30, a combustion section 32, and a turbine section 34. The compressor section 30 includes a low-pressure compressor (LPC 30A) and a high-pressure compressor (HPC 30B). The turbine section 34 includes a high-pressure turbine (HPT 34A) and a low-pressure turbine (LPT 34B). The engine sections are arranged sequentially along the centerline 22 within an engine housing. The LPC 30A and the LPT 34B are connected to one another as part of a low pressure spool (LP spool 37). The HPC 30B and the HPT 34A are connected to one another as part of a high pressure spool (HP spool 39).

Air entering the gas turbine engine 20 through the airflow inlet 24 (forward of the fan section 28) is bisected between a core gas path 36 and a fan bypass air path 38. A portion of the air entering the gas turbine engine 20 passes through the fan section 28 and enters the core gas path 36. The core gas path 36 extends through the LPC 30A, the intermediate case 31, the HPC 30B, the combustion section 32, the HPT 34A, the mid-turbine frame 33, the LPT 34B, and the turbine exhaust case 35. Core gas exiting the LPT 34B exits the engine 20 via the exhaust 26. The remainder of the air entering the gas turbine engine 20 passes through the fan section 28 and enters the fan bypass air path 38 which is disposed radially outside of the core of the engine 20. The gas turbine engine 20 is diagrammatically shown in FIG. 1 engaged with a nacelle structure 40. The nacelle structure 40 is configured to provide an annular region radially outside of the core of the gas turbine engine 20. The annular region (which serves as the fan bypass air path 38) is defined by an outer radial structure 40A and an inner radial structure 40B. In some embodiments, a fan exit guide vane (FEGV 41) extends between the inner radial structure 40B and the outer radial structure 40A. The outer radial structure 40A defines the outer radial boundary of the fan bypass air path 38 and the inner radial structure 40B defines the inner radial boundary of the fan bypass air path 38.

The gas turbine engine 20 configuration diagrammatically shown in FIG. 1 is a non-limiting example provided to facilitate the description herein. The present invention may be implemented in a variety of different gas turbine engine configurations (including reverse flow configurations) and is not therefore limited to the gas turbine engine 20 configuration shown in FIG. 1. For example, in some gas turbine engine configurations the fan section 28 may be connected to a geared architecture (not shown) through a fan shaft. In addition, the nacelle structure diagrammatically shown in FIG. 1 is provided to facilitate the description herein and the present invention is not limited to this nacelle structure example.

The terms "forward" and "aft" are used herein to indicate the relative position of a component or surface. In the axial engine shown in FIG. 1, the fan section 28 is forward of the compressor section 30 and the turbine section 34 is aft of the compressor section 30. The terms "inner radial" and "outer radial" refer to relative radial positions from the engine centerline 22. An inner radial component or path is disposed radially closer to the engine centerline 22 than an outer radial component or path.

The gas turbine engine 20 diagrammatically shown in FIG. 1 further includes an accessory gearbox 42. The accessory gearbox 42 includes a first rotational drive port 44A configured to transfer rotational drive between the LP spool 37 and the accessory gearbox 42. In some embodiments (e.g., like that shown in FIG. 1), the accessory gearbox 42 may also include a second rotational drive port 44B configured to transfer rotational drive between the HP spool 39 and the accessory gearbox 42. In both instances, a tower shaft (or other mechanical arrangement) may be used as an intermediary between the respective rotational drive port 44A, 44B and the respective spool 37, 39. The accessory gearbox 42 further includes at least one accessory dock 46 configured to mount an accessory such as an electric machine 48. FIG. 1 diagrammatically illustrates a electric machine 48 mounted on the accessory dock 46. Details of the electric machine 48 are provided hereinafter.

The accessory gearbox 42 is configured such that the accessory (e.g., the electric machine 48) mounted on the accessory dock 46 is driven at a rotational speed that is a function of the speed of the input rotational drive, for example, from the LP spool 37. The differences in rotational speed between the accessory (e.g., electric machine 48) and the input rotational drive may be produced by a gear arrangement disposed within the accessory gearbox 42 and may be expressed in terms of a ratio. If the ratio of rotational speeds is such that the accessory is driven at a rotational speed faster than the rotational speed of the input rotational drive, then variations in the rotational speed of the input rotational drive (e.g., the LP spool 37) will produce larger variations in the rotational speed of the accessory.

In the embodiment shown in FIG. 1, the accessory gearbox 42 includes a controllable clutch 50 or other structure capable of rotationally connecting and disconnecting the electric machine 48 from the accessory gearbox 42; e.g., the accessory gearbox 42 may be driven by a spool 37, 39, but when the clutch 50 in a disengaged configuration, it separates the electric machine 48 from the driven gear arrangement disposed within the accessory gearbox 42.

A first mechanical arrangement (e.g., a first tower shaft 52) is diagrammatically shown connecting the accessory gearbox 42 to the LP spool 37 and a second mechanical arrangement (e.g., a second tower shaft 54) is diagrammatically shown connecting the accessory gearbox 42 to the HP spool 39. The present invention is not limited to using tower shafts for mechanical engagement with a spool.

The electric machine 48 may be an electric motor that can be controlled to produce and input rotational drive into the accessory gearbox 42, or controlled to function as a generator that produces electricity that may be used elsewhere within the propulsion system or the aircraft. Very often, an electric motor will have a predetermined maximum rotational speed limit. Operation of the electric motor above that speed limit may be detrimental to the electric motor.

In some embodiments, embodiments of the present invention may include a controller 56 to facilitate control of electric machine 48 and control of the pitch control mechanism 58. The term "controller" as used herein refers to a device that may include any type of power electronics device, motor drive, computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to accomplish the same algorithmically and/or coordination of system components. The controller 56 may include or may be in communication with one or more memory devices. The present invention is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 56 may be an independent component or may be integrated within another controller present with the gas turbine engine 20 (or aircraft). The present invention is not limited to any particular controller architecture unless specifically stated herein.

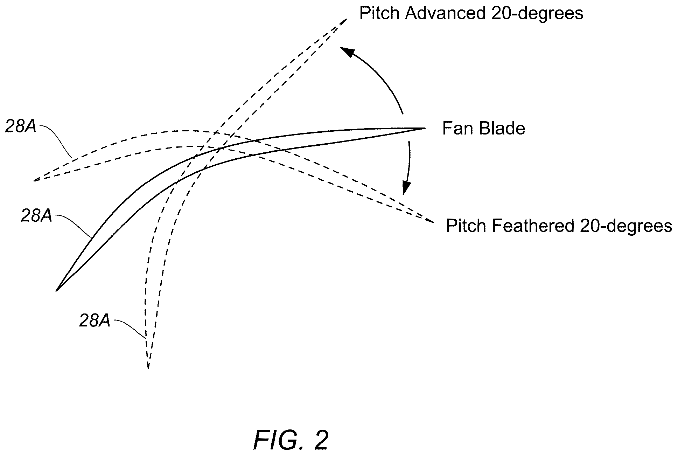

The fan section 28 of the gas turbine engine 20 diagrammatically shown in FIG. 1 has a plurality of fan blades 28A that are spaced apart from one another around a circumference of the fan section 28. The fan section 28 may also be referred to as a fan rotor. The fan section 28 is configured as a variable pitch fan. A controllable pitch control mechanism 58 is an actuation motor that is utilized to selectively alter the angle of the fan blades 28A relative to the direction of rotation; i.e., the "pitch" of the fan blades 28A. Control of the pitch control mechanism 58 may be accomplished by the controller 56 executing stored instructions and likely includes coordination / communication with separate system controllers such as a FADEC (Full Authority Digital Engine Control) or an EEC (Electronic Engine Control). Increasing the pitch (sometimes referred to as "advancing the pitch") increases the thrust produced by the fan blade 28A, and decreasing the pitch (sometimes referred to as "feathering the pitch") decreases the thrust produced by the fan blade 28A. FIG. 2 diagrammatically illustrates a fan blade 28A disposed in a neutral pitch position, a first phantom view of the blade 28A in dashed line rotated to a pitch advanced 20 degrees position, and a second phantom view of the blade 28A in dashed line rotated to a pitch feathered 20 degrees position. The present invention is not limited to using any particular pitch control mechanism 58 configuration to change the pitch of the fan blades 28A.

During descent of an aircraft, the aircraft will often be controlled to follow a predetermined descent profile by, for example, manipulating a throttle position to maintain a descent rate or profile, an approach profile, or the like. An autothrottle system (or any other automated thrust / throttle control system) may be used to control the gas turbine engine 20 to maintain the predetermined descent profile (or approach profile), or the control may be provided manually by the operator.

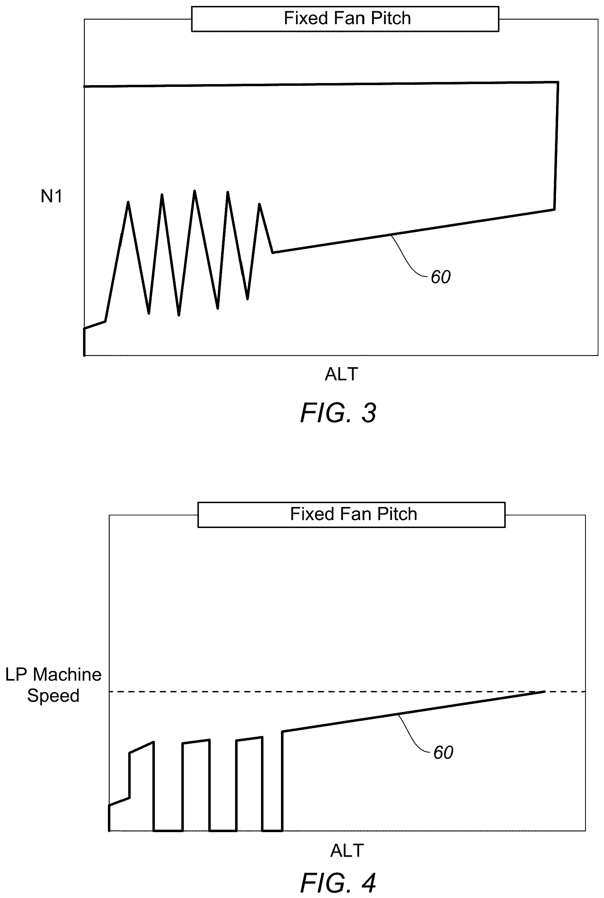

In a gas turbine engine having a fixed pitch fan section, it is often necessary to manipulate the rotational speed of the LP spool 37 of the engine to maintain the desired descent profile. FIG. 3 graphically illustrates an example flight profile in terms of LP spool 37 speed (N1) versus altitude (ALT) for a gas turbine engine 20 having a fixed pitch fan section. The flight profile includes a descent profile portion 60. Actions to add or remove thrust (e.g., increases or decreases in engine speed) to maintain the desired predetermined descent profile are shown as sharp N1 speed excursions. If the LP spool 37 is mechanically linked to the electric machine 48, the electric machine 48 will also be subject to these sharp rotational speed excursions. If the speed excursions are large enough, the rotational speed of the electric machine 48 may exceed its predetermined maximum rotational speed limit and therefore be potentially detrimental.

FIG. 4 graphically illustrates an example of a descent profile in terms of electric machine rotational speed ("LP Machine Speed") versus altitude (ALT) for a gas turbine engine 20 having a fixed pitch fan section. The dashed line shown in FIG. 4 is representative of the predetermined maximum rotational speed limit of the electric machine 48. As can be seen in FIG. 3, there are intermittent profile segments wherein the electric machine rotational speed drops to zero and others wherein the electric machine rotational speed is clipped. These profile segments may be produced by the electric machine 48 being disengaged from the LP spool 37 by a clutch type device or otherwise speed controlled by a transmission or the like. The electric machine 48 is unavailable to produce electrical energy when disengaged from the LP spool 37.

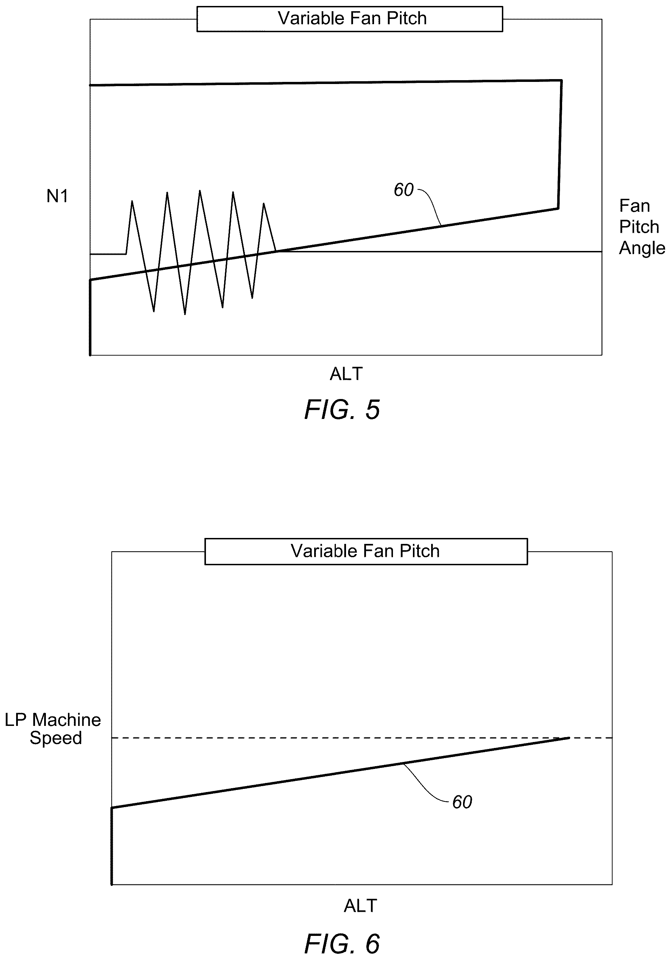

FIG. 5 graphically illustrates an example flight profile in terms of LP spool speed (N1) versus altitude (ALT) for a gas turbine engine 20 having a variable pitch fan section according to the present invention. In this graph, the descent profile portion is shown as a straight line at a constant slope. The graph in FIG. 5 also includes a line labeled "fan pitch angle". The fan pitch illustrates a number of fan pitch angle excursions. These fan pitch angle excursions are representative of the fan pitch being advanced or feathered to add or remove thrust as necessary to enable the aircraft to follow the desired descent profile. Importantly, these fan pitch angle excursions add or remove thrust produced by the fan with minimal variation in the LP spool speed (N1) as represented by the constant slope descent profile. The constant slope descent profile may also be described as the LP spool 37 having a substantially constant rate of decrease and/or as having a negative slope. Hence, embodiments of the present invention make it possible to add or remove thrust to enable the aircraft to follow the desired descent profile while avoiding sharp N1 speed excursions like those shown in FIG. 2. Avoiding the sharp N1 speed excursions also facilitates operating the electric machine 48 below its predetermined maximum rotational speed limit. It should be noted that in those instances wherein fan pitch is manipulated to add thrust, the electric motor 48 may be controlled to change from a "torque extracting mode", wherein the electric machine 48 is functioning as an electric generator producing electric energy, to a "torque injecting mode", wherein the electric machine 48 is functioning as an electric motor that provides a torque input into the accessory gearbox 42 that facilitates achieving the constant slope descent profile.

FIG. 6 graphically illustrates an example of a descent profile in terms of electric motor rotational speed ("LP Machine Speed") versus altitude (ALT) for a gas turbine engine 20 having a variable pitch fan section according to the present invention. In this graph, the descent profile portion is shown as a straight line at a constant slope. The constant slope is representative of a substantially constant rate of decrease in the rotational speed of the electric machine 48 and also indicative of a substantially constant rate of decrease in the LP spool speed. The constant decrease in the rotational speed of the electric machine 48 and the avoidance of sharp N1 speed excursions facilitates operation of the electric machine 48 throughout the descent profile. Electricity produced throughout the descent profile (as opposed to intermittently) may be used in a manner that increases the efficiency of the propulsion system. The avoidance of sharp N1 speed excursions may also obviate the need to use a clutch or a transmission with the electric machine 48 and the cost associated therewith.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this invention by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present invention is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the inventions may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the inventions--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present invention are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A method of operating a propulsion system for an aircraft, wherein the propulsion system includes a gas turbine engine (20), an accessory gearbox (42), and an electric motor (48), wherein the gas turbine engine (20) includes a spool (37) that includes a fan rotor (28) having a plurality of fan blades (28A), and a pitch control mechanism (58) engaged with the plurality of fan blades (28A), the method comprising:
providing rotational drive from the spool (37) to the accessory gearbox (42);
using the accessory gearbox (42) to drive the electric motor (48) to produce electrical energy, wherein the electric motor (48) has a predetermined maximum rotational speed limit; and
controlling the propulsion system to follow a predetermined descent portion (60) of a flight profile for the aircraft, wherein controlling the propulsion system includes controlling the pitch control mechanism (58) to alter an amount of thrust produced by the plurality of fan blades (28A) by altering a pitch of the plurality of fan blades (28A).

2. The method of claim 1, wherein the step of using the accessory gearbox (42) to drive the electric motor (48) includes driving the electric motor (48) at an electric motor rotational speed below the predetermined maximum rotational speed limit.

3. The method of claim 1 or 2, wherein:
the spool (37) is a first spool (37) extending between the fan rotor (28) and a first turbine section (34B); and
the gas turbine engine (20) further includes a second spool (39) that extends between a compressor section (30B) and a second turbine section (34A).

4. A method of operating an aircraft propulsion system that includes a gas turbine engine (20), an accessory gearbox (42), and an electric machine (48), wherein the gas turbine engine (20) includes a spool (37) that includes a fan rotor (28) having a plurality of fan blades (28A) and a turbine section (34), and a pitch control mechanism (58) engaged with the plurality of fan blades (28A), wherein the accessory gearbox (42) is in drive communication with the spool (37), and the electric machine (48) is mounted on the accessory gearbox (42), the method comprising:
controlling a rotational speed of the spool (37) during a descent portion (60) of a flight profile, including controlling the pitch control mechanism (58) to alter an amount of thrust produced by the plurality of fan blades (28A) by altering a pitch of the plurality of fan blades (28A); and
providing rotational drive to the electric machine (48) from the accessory gearbox (42) during the descent portion of the flight profile.

5. The method of any preceding claim, wherein the descent portion (60) is a function of a rotational speed of the spool (N1) versus altitude (ALT).

6. The method of any preceding claim, wherein:
the descent portion (60) has a constant slope; and/or
the descent portion (60) has a negative slope.

7. The method of any preceding claim, wherein:
the electric machine (48) has a predetermined maximum rotational speed limit; and
the step of controlling the pitch control mechanism (58) to alter the amount of thrust produced by the plurality of fan blades (28A) is performed to maintain a speed of the electric machine (48) below the predetermined maximum rotational speed limit.

8. The method of any preceding claim, wherein:
the electric machine (48) is configured to function as an electric generator; and/or
the electric machine (48) is also configured to function as an electric motor.

9. An aircraft propulsion system, comprising:
a gas turbine engine (20) that includes a first spool (37) and a pitch control mechanism (58), wherein the first spool (37) includes a first compressor section (30A), a first turbine section (34B), and a fan section (28), and the fan section (28) includes a plurality of fan blades (28A), and wherein the pitch control mechanism (58) is engaged with the plurality of fan blades (28A) and is configured to alter a pitch of the plurality of fan blades (28A);
an accessory gearbox (42) in drive communication with the first spool (37);
an electric machine (48) mounted on the accessory gearbox (42); and
a controller (56) in communication with the pitch control mechanism (58), the electric machine (48), and a non-transitory memory storing instructions, which instructions, when executed, cause the controller (56) to:
control a rotational speed of the first spool (37) during a flight profile, including controlling the pitch control mechanism (58) to alter an amount of thrust produced by the plurality of fan blades (28A) by altering a pitch of the plurality of fan blades (28A); and
control the electric machine (48) to produce electric energy during the flight profile.

10. The system of claim 9, wherein the instructions, when executed, cause the controller (56) to control the rotational speed of the first spool (37) during a descent portion (60) of the flight profile, and control the electric machine (48) to produce electric energy during the descent portion (60) of the flight profile.

11. The system of claim 10, wherein:
the descent portion (60) is a function of the rotational speed of the first spool (N1) versus aircraft altitude (ALT); and/or
the descent portion (60) has a negative slope.

12. The system of any of claims 9 to 11, wherein the electric machine (48) has a predetermined maximum rotational speed limit; and
the instructions that, when executed, cause the controller (56) to control the rotational speed of the first spool (37) during the flight profile, also cause a speed of the electric machine (48) to be maintained below the predetermined maximum rotational speed limit.

13. The system of any of claims 9 to 12, wherein the electric machine (48) is configured to function as an electric generator.

14. The system of any of claims 9 to 13, wherein the gas turbine engine (20) further includes a second spool (39) that includes a second compressor section (30B) and a second turbine section (34A).

15. The system of claim 14, wherein the first compressor section (30A) is a low pressure compressor section, the first turbine section (34B) is a low pressure turbine section, the second compressor section (30B) is a high pressure compressor section, and the second turbine section (34A) is a high pressure turbine section.
